# EUROPEAN PATENT APPLICATION

(11) **EP 2 487 278 A2**
(43) Date of publication of application: **15.08.2012**
(21) Application number: 10822249.8
(22) Date of filing: 07.10.2010
(51) Int. Cl.: C25B 11/04, C25B 9/00, C02F 1/469

(54) **ION-SELECTIVE CAPACITIVE DEIONIZATION COMPOSITE ELECTRODE, AND METHOD FOR MANUFACTURING A MODULE**

(30) Priority: 07.10.2009 KR 20090095274; 15.06.2010 KR 20100056603
(71) Applicant: Sion Tech Co., Ltd, Yuseong-gu, Daejeon 305-500 (KR)
(72) Inventor: KANG, Kyung Seok, Daejeon 305-345 (KR); SON, Won Keun, Seoul 139-200 (KR); CHOI, Jae Hwan, Cheonan-si Chungcheongnam-do 330-060 (KR); PARK, Nam Soo, Gongju-si Chungcheongnam-do 314-110 (KR); KIM, Tae Il, Daejeon 305-755 (KR)
(74) Representative: Stolmár Scheele & Partner
(86) International application number: PCT/KR2010/006861
(87) International publication number: WO 2011/043604

(57) **Abstract**

Provided are a CDI electrode and a method for manufacturing a module using the same. A composite electrode manufactured by the manufacturing method of the present invention can manufacture a CDI electrode capable of increasing adsorption efficiency and rate of ions and selectively adsorbing cation and anion, thereby simply and inexpensively manufacturing the CDI electrode module without using a cation-exchange membrane and an anion-exchange membrane.

## Description

### [Technical Field]

The present invention relates to a CDI composite electrode capable of adsorbing and desorbing dissolved ions and a method for manufacturing the same, and more particularly, to a composite electrode having ion selectivity capable of efficiently adsorbing and desorbing dissolved ions without using a cation-exchange membrane and an anion-exchange membrane as an electrode capable of efficiently separating and removing cation and anion and a method for manufacturing an CDI composite electrode module.

Further, the present invention relates to a composite electrode having an excellent deionization effect capable of efficiently adsorbing and desorbing dissolved ions without substantially changing pH of deionized purified water in response to applied potential and a method for manufacturing the same.

### [Background Art]

In manufacturing domestic water or industrial water, a deionization technology plays a very important role of determining person's health, efficiency of a process, and performance of a product. When people drink water including heavy metals, nitrate nitrogen, and fluoride ions for a long period of time, their health may be fatally affected.

Further, water of a boiler including hardness materials incurs a scale in a boiler or a heat exchanger and therefore, may greatly degrade process efficiency. As a result, ultra-pure water from which ion materials are completely removed serves as an important factor of determining performance of a product even in an electronic industry or a pharmaceutical industry.

As a method for removing ionic materials in an aqueous solution, an ion-exchange method using an ion-exchange resin has been mainly used so far. The ion-exchange method may effectively separate most of ionic materials, but has a disadvantage of generating a large amount of acid, base, or a waste liquid of salt during a regeneration of the ion-exchange resin. In addition, a separating membrane technology such as a reverse osmosis membrane method, an electrodialysis, or the like, has been applied, but has disadvantages such as reduction in processing efficiency due to a fouling of the membrane, cleaning of a polluted membrane, a replacement of periodic membrane, or the like. In order to solve the problems of the existing deionization technologies, a capacitive deionization technology using a principle of an electric double layer has been researched, which is applied to the deionization process.

Since the capacitive deionization uses adsorption reaction of ions due to electrical attraction in the electric double layer formed on a surface of the electrode when potential is applied to the electrode, it is operated at low electrode potential (about 1 to 2V) and thus, has much lower energy consumption than other deionization technologies. Therefore, the capacitive deionization has been evaluated as a low-energy consumption type next-generation deionization technology.

A core of the capacitive deionization technology is to develop an electrode capable of remarkably improve capacitance of the electrode. Research for manufacturing an electrode using carbon-based materials such as activated carbon powder, activated carbon fiber, carbon nanotube, carbon aerogel, or the like, having high specific surface area and excellent electric conductivity as an electrode active material has been actively conducted from 1990. However, in the case of the electrode manufactured as described above, capacitance is determined according to kind, property, and ratio of a carbon body, which leads to a limitation in improving the performance of the electrode.

Another problem of the capacitive deionization technology is that the absorption efficiency of ions is reduced during the deionization process since the ions adsorbed into the electric double layer are completely desorbed. The CDI process removes ion materials from inflow water due to the adsorption reaction in the electric double layer formed on the surface of the electrode when the electrode potential of 1 to 2V is applied. When the adsorbed ions reach the capacitance of the electrode, the electrode potential is converted into 0 V or reverse potential to desorb the adsorbed ions, thereby regenerating the electrode. In this case, the electric double layer is formed by moving ions to an opposite surface of the electrode while desorbing the ions adsorbed to the electrode due to the change in the electrode potential and the adsorbed ions are completely not desorbed and thus, remain on a surface of a counter electrode, thereby reducing the adsorption efficiency of the electrode. Further, efficiency of a unit electrode is improved by using the cation-exchange membrane and the anion-exchange membrane having the ion selectivity but the stacked number of the electrode is reduced in the module, such that an instantly treated flux is reduced and cost of the ion-exchange membrane commercially produced is increased, thereby increasing the manufacturing cost of the CDI electrode module and making the manufacturing process complicated.

### [Disclosure]

### [Technical Problem]

An object of the present invention is to provide a CDI composite electrode having high adsorption and desorption efficiency of dissolved ions during an operation of a process while increasing capacitance of an electrode and a method for manufacturing a module using the same.

Another object of the present invention is to provide an embodiment of the present invention is directed to a new CDI composite electrode having high adsorption and desorption efficiency of dissolved ions capable of increasing an instantly treated flux while solving a problem of degrading adsorption efficiency by moving ions of opposite charge to a counter electrode during a process of desorbing adsorbed ions and a method for manufacturing a module using the same.

Another object of the present invention is to provide a new CDI composite electrode capable of maintaining adsorption and desorption efficiency of ions for a long period of time by preventing fouling from occurring from the CDI electrode for removing dissolved ions due to a long-term use thereof and maintaining ionization efficiency by constantly maintaining pH of treated water for a long period of time while originally maintaining performance of drinkable water and a module using the same and a method for manufacturing a module using the same.

Another object of the present invention is to provide a new CDI composite electrode capable of stably providing treated water without substantially changing pH of the treated water in response to a difference in applied voltage during operation and a module using the same and a method for manufacturing a module using the same.

### [Technical Solution]

The present invention for achieving the above objects relates to a new capacitive deionization composite electrode, a method for manufacturing the same, and a method for manufacturing a module using the same.

In order to solve the above problems, according to an aspect of the present invention, the present invention was completed by understanding that the above objects can be achieved by coating polymer having a ion-exchange functional group as a binder material on an electrode and again coating a polymer binder having ion-exchange functional group having the same ion selectivity over the electrode.
That is, the present invention was completed by understanding that the above objects are achieved by manufacturing an electrode formed by primarily coating a polymer binder having an ionic functional group on a surface of an electrode without using an ion-exchange membrane and manufacturing a module having a CDI electrode using a composite electrode as a negative electrode and a positive electrode by forming a secondary coating layer coated with a binder having an ionic functional group over the electrode. These effects are not quite sure but can prevent a fouling phenomenon by increasing smoothness of a surface of an electrode according to the formation of a secondary coating layer having an ionic group, implement a long-term use, and increase efficiency. To be more amazed, the present invention was completed by understanding that pH of deionized treated water is constantly maintained in response to applied potential by forming a top layer by secondarily coating the negative electrode and the positive electrode with a polymer binder having an ionic group to stably use drinking water.

In one general aspect, a method for manufacturing a new CDI electrode for removing dissolved ions, includes: preparing an organic solution slurry prepared by dissolving an ion-exchangeable ionic resin in an organic solvent and adding an electrode active material to the solution, manufacturing an electrode by applying the slurry to a collector, and forming a top ionic coating layer by again coating a surface of the manufactured electrode with a resin solution having an ion-exchange group.

In another general aspect, the ion-exchangeable polymer resin does not mean the ion-exchange resin that is generated cross-linked and is not dissolved in the solvent but mean a resin that can be dissolved in the organic solvent but is not substantially dissolved in water as a resin having the ion-exchange group. Insolubility means a resin having solubility of generally 10 wt% or less, preferably, 5 wt% or less, more preferably, 1 wt% or less.

Hereinafter, the exemplary embodiment of the present invention will be described in more detail.

Another exemplary embodiment of the present invention may include preparing a polymer solution having ion selectivity by dissolving ionic resin having a cation-exchange group or an anion-exchange group in an organic solvent; preparing a slurry by adding an electrode active material to the polymer solution, forming an active layer by applying the slurry to a collector, forming a top ionic coating layer by preparing an ionic resin solution having a cation-exchange group or an anion-exchange group and then, coating the electrode with an ionic resin solution using an ionic resin having an ionic exchange group like the ionic resin used for the active layer, drying for removing a solvent from the electrode, cutting the manufactured composite electrode in a constant form, and manufacturing a module by stacking the cut (positive electrode and negative electrode) electrode and a spacer.

Further, at the preparing of the slurry, when a conductive material is further added, the electric conductivity of the composite electrode can be more improved.

The composite electrode according to the exemplary embodiment of the present invention includes the coating layer of the resin having the ion-exchange group including the electrode active material and a second coating layer manufactured by again coating the resin solution having the ion-exchange group on the outside thereof, such that the smoothness of the surface of the electrode is increased to reduce the generation of the fouling due to the long-term use and increase the ion removal efficiency and the electrode active material is applied to the collector to increase the lifespan of the electrode. In addition, as could not find the cause, it could be appreciated that the composite electrode exerts the excellent performance without substantially changing pH in response to the applied potential due to the long-term use and more efficiently removes the high-concentration dissolved ions.

In addition, the module manufactured using the composite electrode according to the exemplary embodiment of the present invention is manufactured by injecting an electrolytic cell in which the composite electrode and the spacer are stacked into a case in which an inlet and an outlet of water in which the dissolved ions are dissolved are formed. In this case, the module can increase the instantly treated flux by increasing the stacked number of the electrode in a unit space without using the ion-exchange membrane, the large-capacity module can be implemented by the consecutively connected cell structure, and the module can be used for a long period of time and can maintain the removal efficiency of ions for a long period of time. Further, the module adopts the structure in which the double layer ion resin according to the present invention is coated, thereby making the removal of ions more excellent under the presence of the high dissolved ion concentration.

Describing in detail these effects, the present invention prepares the slurry prepared by mixing the electrode active material with the ion-exchange resin binder and applies the slurry to the collector to manufacture the electrode, coats the ionic resin solution having the ion-exchange functional group to remarkably increase the smoothness of the surface and make the surface of each portion of the composite electrode uniform, thereby preventing foreign objects from being piled up and uniformly provides charges to the overall electrode to prevent defects of a local electrode, thereby making a load uniform. As a result, the present invention can manufacture the CDI composite electrode having excellent ion selectivity for adsorbing and desorbing dissolved ions while improving the lifespan of the electrode.

In the exemplary embodiment of the present invention forms the top ionic coating layer formed by coating the ionic binder resin having the ion-exchange group on the electrode active material layer formed by applying the electrode active material to the collector to have the opposite charge of the ions adsorbed due to the dissociation of the ion-exchange functional group included in the ion-exchange resin, which serves as a factor of increasing electrostatic attraction at the time of adsorbing ions to increase the adsorption efficiency and rate of ions.

According to another exemplary embodiment of the present invention, there is provided a method for manufacturing a CDI electrolytic cell for adsorbing and desorbing dissolved ions, the CDI electrolytic cell being manufactured by sequentially stacking a composite electrode and a spacer, wherein a method for manufacturing a composite electrode includes: (a) manufacturing an electrode by preparing an organic solvent slurry including an organic solvent, an ionic resin having a cation-exchange group, and an electrode active material and then, forming an active layer by applying the slurry to a collector; (b) manufacturing an electrode by preparing an organic solvent slurry including the organic solvent, an ionic resin having an anion-exchange group, and the electrode active material and then, forming an active layer by applying the slurry to a collector, and (c) forming a top cationic coating layer by coating the electrode formed at (a) with the organic solution in which the ionic resin having the cation-exchange group is dissolved and forming a top anionic coating layer by coating the electrode formed at (b) with the organic solution in which the ionic resin having the anionic exchange group is dissolved.

In more detail, according to the exemplary embodiment of the present invention, in the first aspect of the method for manufacturing a CDI electrolytic cell for adsorbing and desorbing dissolved ions manufactured by sequentially stacking a composite electrode and a spacer, the method including: manufacturing an electrode by preparing an organic solvent slurry including an organic solvent, an ionic resin having a cation-exchange group, and an electrode active material and then, forming an active layer by applying the slurry to a collector; and forming a top cationic coating layer by coating the electrode with an organic solution in which the ionic resin having the cation-exchange group is dissolved.

According to another exemplary embodiment, a method for manufacturing a CDI electrolytic cell for adsorbing and desorbing dissolved ions, the CDI electrolytic cell manufactured by sequentially stacking a composite electrode and a spacer, the method including: manufacturing an electrode by preparing an organic solvent slurry including an organic solvent, an ionic resin having an anion-exchange group, and an electrode active material and then, forming an active layer by applying the slurry to a collector, and forming a top anionic coating layer by coating the electrode with an organic solution in which the ionic resin having the cation-exchange group is dissolved.

An exemplary embodiment of the present invention relates to a method for manufacturing a CDI electrolytic cell for adsorbing and desorbing dissolved ions further including: drying after steps (a), (b), or (c).

The exemplary embodiment of the present invention relates to a method for manufacturing a CDI electrolytic cell for adsorbing and desorbing dissolved ions further including: pressing for smoothing the surface of the composite electrode subsequent to the drying after step (c).

Further, the exemplary embodiment of the present invention relates to the method for manufacturing a CDI electrolytic cell for adsorbing and desorbing dissolved ions, in which at the preparing of the slurry, a conductive material is added.

Hereinafter, the steps of the exemplary embodiment of the present invention will be described.

First, the ionic resin having the cation-exchange group uses ones having the cation-exchange groups such as a sulfonic acid group (-SO₃H) a carboxyl group (-COOH), a phosphonic group (-PO₃H₂), a phosphinic group (-HPO₂H), an A-sonic group (-AsO₃H₂), a selenonic group (-SeO₃H), or the like, and the ionic resin uses ones having the anion-exchange group such as quaternary ammonium salt (-NH₃), primary ∼ tertiary amine (-NH₂, -NHR, -NR₂), a quaternary phosphonium group (-PR₄), a tertiary sulfonium group (-SR₃), or the like. The ionic resin may be in a solution type by being melted in the organic solvent. In detail, the ionic resin may use, for example, one selected from polystyrene, polysulfone, polyethersulfone, polyamide, polyester, polyimide, polyether, polyethylene, polytetrafluoroethylene, and poly-glycidyl methacrylate or a mixture of two or more thereof, but is not limited thereto. Therefore, any resin that may have the cation-exchange group or the anion-exchange group may be used without being limited.

Further, a weight-average molecular weight of the ionic resin having the ion-exchange group is not limited, but preferably, is 50,000 to 4,000,000, more preferably, 300,000 to 1,500,000. When the ionic resin within the range is used, the viscosity of the electrode slurry and the coupling property of the electrode active materials is excellent.

The organic solvent is selected according to a kind of the polymer resins. The organic solvent in which the aforementioned polymer resin is dissolved may use any one selected from dimethylformamide, dimethyl acetamide, N-methyl-2-pyrrolidone, acetone, chloroform, dichloromethane, trichlorethylene, ethanol, methanol, normal hexane or a mixture of two or more thereof, but is not limited thereto.

At steps (a) and (b), the organic solution slurry is prepared by preparing the polymer solution having ion selectivity by dissolving the ionic resin having the cation-exchange group or the anion-exchange group in the organic solvent and then, adding the electrode active material thereto. At the time of preparing the polymer solution, a solid content is preferably 1 to 50 wt%, more preferably, 3 to 10 wt%. When the solid content is less than 1 wt% or exceeds 30 wt%, the viscosity of the polymer solution is too low or too high, such that it is difficult to prepare the electrode slurry.

Next, as the preparing of the slurry by adding the electrode active material, the conductive material, or a mixture thereof to the polymer solution, the specific surface area and capacitance of the electrode can be more improved by adding the electrode active material to the polymer solution. In addition, the electric conductivity of the electrode can be more improved by adding the conductive material to the polymer solution.

The electrode active material may use activated carbon powder, activated carbon fiber, carbon nano tube, carbon aerogel, or a mixture thereof, as activated carbon-based materials having the high specific surface area, but is preferably manufactured and used as the power. In addition, as the metal oxide-based material, RuO₂, Ni(OH)₂, MnO₂, PbO₂, TiO₂ or a mixture thereof may be used. The electrode active material may have contents controlled according to required physical properties. In more detail, the electrode active material having an average particle size of 10 **µ**m or less, in more detail, 10 nm to 10 **µ**m may increase the specific surface area and the capacitance, but is not limited thereto. The electrode active material having 50 to 1000 parts by weight for 20 parts by weight of the polymer material having the ion-exchange functional group is advantageous in manufacturing the electrode having the high capacitance while exhibiting the ion selectivity.

In addition, the exemplary embodiment of the present invention may use the conductive material in addition to the electrode active material. In this case, any conductive material having low electric resistance may be used without being limited. In addition, conductive carbon black, such as acetylene black, ketjen black, XCF carbon, SRF carbon, or the like, may be used

The conductive material may have contents controlled in response to required physical properties. In more detail, the electrode active material having an average particle size of 1 **µ**m or less, more specifically, 10 nm to 1 **µ**m may increase the electric conductivity of the electrode, but is not limited thereto. The electrode active material having 1 to 10 parts by weight for 100 parts by weight of the polymer material is advantageous in increasing the electric conductivity and capacitance of the electrode.

Next, as the applying of the slurry to the collector, when the collector supplies current to the manufactured electrode through a power supplier, the collector having the excellent electric conductivity may be used so that electric field may be uniformly distributed to the surface of the electrode. As the example, a sheet, a thin film, or a plain weave wire cloth type including aluminum, nickel, copper, titanium, iron, stainless steel, graphite, or a mixture thereof may be used.

In addition, when as the applying method, spray, dip coating, knife casting, doctor blade, spin coating, or the like, may be used without being limited and an applying thickness is in the range of 50 to 300 **µ**m, the electric resistance of the electrode can be reduced and the deionization efficiency can be increased.

Further, the applying of the slurry to the collector is repeated once more as needed, thereby making it possible to manufacture the electrode having the specific thickness.

Next, as the forming of the top ionic coating layer by coating the electrode with the ionic resin solution having the cation-exchange group or the anion-exchange group at step (C), when as the applying method, spray, dip coating, knife casting, doctor blade, spin coating, or the like, may be used without being limited and the coating thickness is preferably in a range of 2 to 300 **µ**m, more preferably, 20 to 50 **µ**m, the deionization efficiency may be increased while reducing the electric resistance of the electrode.

In this case, at the time of forming the top ionic coating layer, the top ionic coating layer is formed by coating the ionic resin solution having the cationic exchange group over the electrode using the ionic resin having the cationic exchange group and the top ionic coating layer is formed by coating the ionic resin solution having the anionic exchange group over the electrode using the ionic resin having the anionic exchange group. The exemplary embodiment of the present invention forms the top ionic coating layer, thereby achieving the very excellent removal rate of salt.

Next, as the drying for removing the solvent of the composite electrode, the method for removing the organic solvent includes a method for separating the organic solvent using normal pressure, vacuum drying, or a non-solvent under the temperature atmosphere of several tens of °C or several hundreds of °C. Describing in detail, the organic solvent is removed using the normal pressure and the vacuum drying under the temperature atmosphere of room temperature to 200 °C or the organic solvent may be eluded and removed while solidificating the ionic resin by dipping the collector to which the slurry is applied in at least any one non-solvent selected from distilled water, alcohol, dimethyl formamide, dimethylacetamide, N-methyl-2-pyrrolidone, and acetone for 1 to 24 hours.

Next, as the pressing of the dried composite electrode so as to be formed at a constant thickness, the pressing may be further provided for smoothing the surface of the electrode, as needed. At the pressing, a compression rate at the time of pressing is preferably about 0 to 30% of the thickness of the dried applying layer. When the compression rate exceeds 30%, the composite electrode has good density of the surface of the composite electrode, but the composite electrode is hardened and thus, is easily broken. As a result, the composite electrode cannot be easily handled. Preferably, setting the compression rate to be 1 to 25% makes the surface of the electrode uniform and the density of the electrode active material sufficient, thereby making the regeneration of the electrode characteristics excellent.

Next, the cutting of the composite electrode in a constant form manufactures the module by cutting the composite electrode in a constant form so as to have a terminal applying electricity and a dimension of the composite electrode may be preferably constant.

Next, the present invention completed the module by cutting the electrode coated with the cation-exchange solution to be used as a negative electrode in the electrode manufactured using the polymer binder including the cationic functional group, cutting the electrode coated with the anion-exchange solution to be used as a positive electrode in the electrode manufactured using the polymer binder including the anionic functional group and stacking the electrodes, having a spacer disposed therebetween.

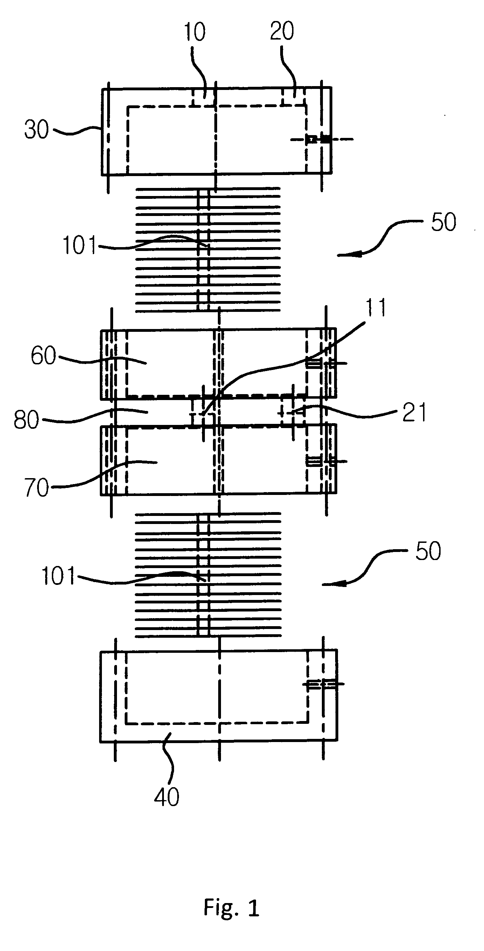

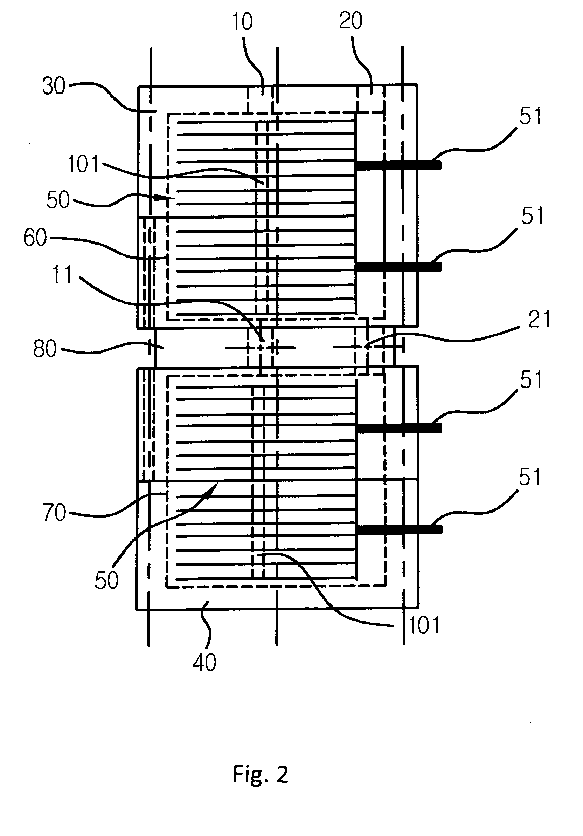

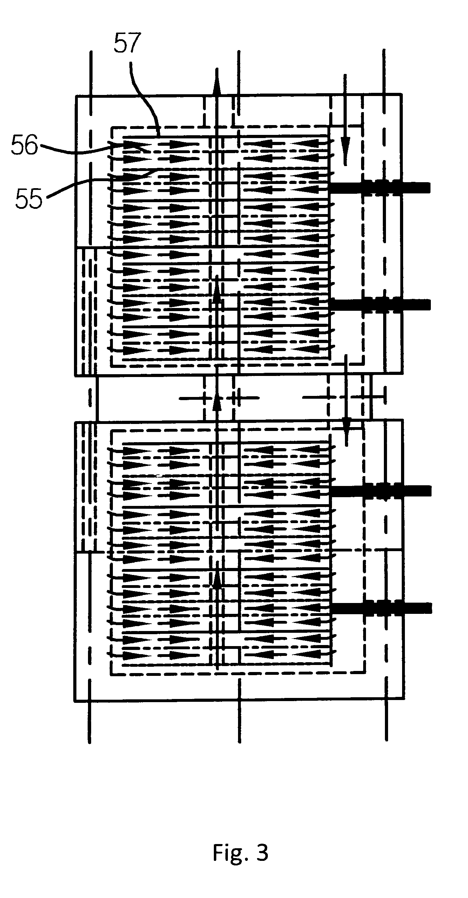

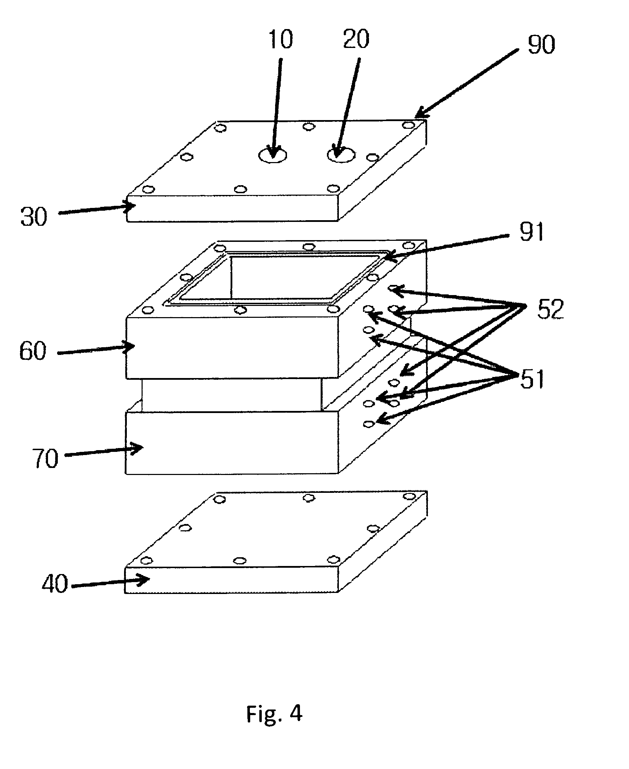

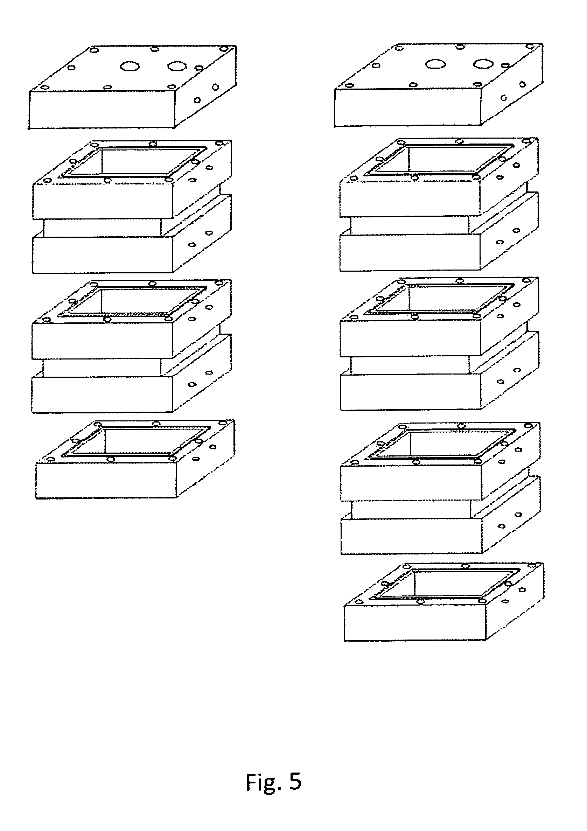

FIG. 1 is a planar view of a module assembly, FIG. 2 is a cross-sectional view of an assembled module, FIG. 3 is a flow chart of treated water, FIG. 4 is a solid view of a module case, and FIG. 5 is a diagram showing a form of a large-capacity module. As shown in FIG. 1, the module is configured to include two isolated spaces as a first chamber 60 and a second chamber 70, wherein an inlet 20 for origin water and an outlet 10 for treated water of the first chamber are present and an inlet 21 of origin water and an outlet 11 of treated water of the second chamber is disposed on an isolated wall 80 so as to be registered with the inlet 20 and the outlet 10 of the first chamber, such that the introduction of the origin water and the discharge of the treated water are made through the same conduit and a positive electrode terminal 51 and a negative electrode terminal 52 of the first chamber and the second chamber may be preferably formed in the same one direction.

FIG. 5 shows that a plurality of CDI composite electrode modules manufacture in a single form are used for advanced purified water and large-capacity purified water without complicated pipes. Since the amount of water treated in the single CDI composite electrode module is small, a new module in which the plurality of CDI composite electrode modules are integrally connected with one another is manufactured. As a result, the CDI composite electrode module capable of implementing the advanced water and treating a large amount of water in a unit space without pipes can be manufactured, such that the amount of treated water can be increased according to a size of the module and the large capacity can be implemented.

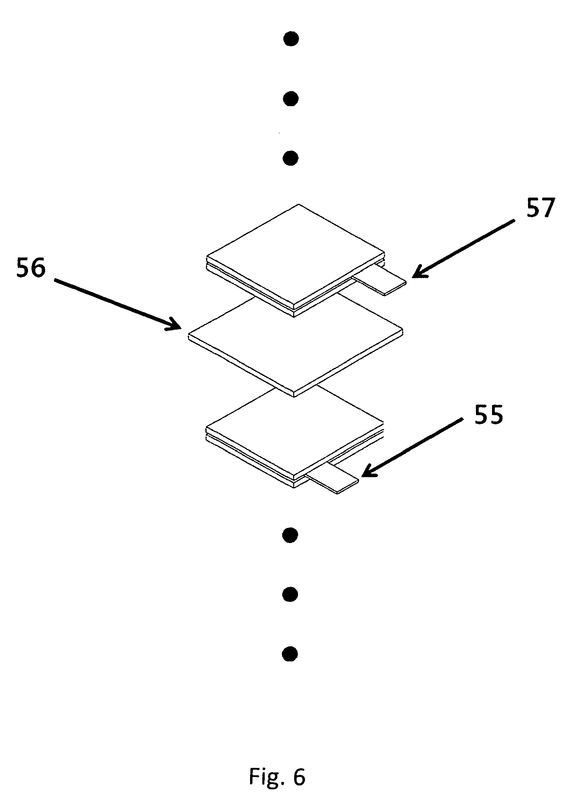

In addition, FIG. 6 shows a stacked flow chart of the composite electrode. As shown in FIG. 6, in the stacked composite electrode, a spacer 56 is disposed between a positive electrode 55 and a negative electrode 57, wherein the spacer 56 is to space the positive electrode 55 and the negative electrode 57 from each other to form a passage through which water may flow therebetween. The spacer 56 may be formed of a nonwoven or a thinly and compactly woven gauze cloth.

In the exemplary embodiment of the present invention, the electrode coated with the ionic resin having the cationic exchange group is used as a negative electrode and the electrode coated with the ionic resin having the anionic exchange group is used as a positive electrode.

### [Advantageous Effects]

The composite electrode manufactured by the method for manufacturing the CDI composite electrode capable of removing the dissolved ions according to the exemplary embodiments of the present invention is configured to include the collector, at least one active layer including the electrode active material surrounding the collector, and the top ionic coating layer that is the ionic resin coating layer having the ion-exchange group surrounding the top of the active layer, thereby smoothing the adsorption and desorption of ions melted in water, increasing the adsorption and desorption rate of ions, increasing the adsorption efficiency, and minimizing the performance degradation due to the long-term use.

Further, the exemplary embodiments of the present invention can minimize the gap between the electrode without using the ion-exchange membrane, prevent the fouling from being accumulated due to the long-term use without deteriorating the surface smoothness due to the electrode active material by forming the electrode layer, prevent the separation of the electrode active material to continue to the effect and long-term use of the composite electrode, and increase the reliability of product by being stably used for a long period of time even though the module having the plurality of stacked structures is manufactured. Therefore, the large-capacity CDI composite electrode can be implemented, thereby more rapidly and effectively performing the adsorption of the ionic material.

### [Description of Drawings]

The above and other objects, features and advantages of the present invention will become apparent from the following description of preferred embodiments given in conjunction with the accompanying drawings, in which:
FIG. 1 is a planar view of a module assembly;
FIG. 2 is a cross-sectional view of an assembled module;
FIG. 3 is a flow chart of treated water;
FIG. 4 is a solid view of a module case;
FIG. 5 is a diagram showing a model of a large-capacity module;
FIG. 6 is a stacked flow chart of an electrode;
FIG. 7 is a diagram showing a change in pH according to potential for an electrode of Comparative Example 18 (showing acidity from high pH to low pH based on 1200 seconds is sequentially operated at 0.8, 1.0, 1.2, and 1.5V);
FIG. 8 is a diagram showing a change in pH according to potential of Comparative Example 24 (showing acidity from high pH to low pH based on 1200 seconds is sequentially operated at 0.8, 1.0, 1.2, and 1.5V);
FIG. 9 is a diagram showing a change in pH according to potential at the time of using an electrode of Comparative Example 20 (showing acidity from high pH to low pH based on 1200 seconds is sequentially operated at 0.8, 1.0, 1.2, and 1.5V); and
FIG. 10 is a diagram showing a change in treated water when purified water and withdrawal water according to an electrode (showing a change in pH of treated water of Comparative Example 18, Comparative Example 13, Comparative Example 9, and Example 1 in a sequence of acid from base having high pH based on 250 seconds).

### [Detailed Description of Main Elements]

10: OUTLET OF FIRST CHAMBER 20: INLET OF FIRST CHAMBER
11: OUTLET OF SECOND CHAMBER21: INLET OF SECOND CHAMBER
30: CASE COVER OF FIRST CHAMBER 40: CASE COVER OF SECOND CHAMBER
50: STACKED ELECTRODE 51: POSITIVE ELECTRODE TERMINAL
52: NEGATIVE TERMINAL 55: POSITIVE ELECTRODE
56: SPACER 57: NEGATIVE ELECTRODE
60: STACKED SPACE OF ELECTRODE (FIRST CHAMBER)
70: STACKED SPACE OF ELECTRODE (SECOND CHAMBER)
80: BARRIER RIB OF FIRST CHAMBER AND SECOND CHAMBER
90: BOLT FASTENER
100: O-RING 101: CENTRAL HOLE OF ELECTRODE

### [Best Mode]

A detailed description of exemplary embodiments of the present invention will be described below by way of example, but exemplary embodiments of the present invention is not limited thereto.

### Manufacturing Example 1

### Manufacturing of Electrode having Cation Selectivity

A polymer solution was manufactured by mixing 1.0g of polystyrene (cation-exchange capacity = 1.5 meq/g, MW = 350,000) having a cation-exchange group prepared by sulfonation reaction with 40g of dimethylacetamide (DMAc) and a cation-exchange electrode slurry was prepared by mixing 9.0g of an activated carbon powder (P-60, Daedong AC (Co.), specific surface area = 1600 m²/g) with the polymer solution.

A negative electrode having cation selectivity was manufactured by coating the prepared slurry on both sides of a conductive graphite sheet (a thickness of 130 **µ**m, Dongbang Carbon (Co.), Cat. No. F02511C), respectively, by doctor blade, wherein a thickness of the coating layer on one surface thereof is 200 **µ**m, and then, drying the coated slurry at 70°C for 30 minutes.

### Manufacturing Example 2

### Manufacturing of Electrode having Anion Selectivity

A polymer solution was manufactured by mixing 1.0g of polyethersulfone (anion-exchange capacity = 1.2 meq/g, MW = 350,000) having an anion-exchange group prepared by aminiation reaction with 40g of dimethylacetamide (DMAc) and an anion-exchange electrode slurry was prepared by mixing 9.0g of an activated carbon powder (P-60, Daedong AC (Co.), specific surface area = 1600 m²/g) with the polymer solution.

A positive electrode having anion selectivity was manufactured by coating the prepared slurry on both sides of a conductive graphite sheet (a thickness of 130 µm, Dongbang Carbon (Co.), Cat. No. F02511C), respectively, by doctor blade, wherein a thickness of the coating layer on one surface thereof is 200 **µ**m, and then, drying the coated slurry at 70°C for 30 minutes.

### Manufacturing Example 3

### Manufacturing of Electrode Using Polyvinylidenedifluoride Slurry

The polymer solution was prepared by mixing 0.4g of polyvinyledenedifluoride (PVdF, Aldrich, Mw = 1,800,000) with 40g of dimethylacetamide and the electrode slurry was prepared by mixing 9.6g of the activated carbon powder (P-60, Daedong AC (Co.), specific surface area = 1600 m²/g) with the polymer solution.

A non-ionic electrode no having anion and cation selectivity was manufactured by coating the prepared slurry on both sides of a conductive graphite sheet (a thickness of 130 **µ**m, Dongbang Carbon (Co.), Cat. No. F02511C), respectively, by doctor blade, wherein a thickness of the coating layer on one surface thereof is 200 **µ**m, and then, drying the coated slurry at 70°C for 30 minutes.

### Manufacturing Example 4

### Manufacturing (1) of Composite electrode Coating Cation-Exchange Solution on Top Ionic Coating Layer

A polymer solution was manufactured by mixing 1.0g of polystyrene (cation-exchange capacity = 1.5 meq/g, MW = 350,000) having a cation-exchange group prepared by sulfonation reaction with 20g of dimethylacetamide (DMAc) and a negative electrode having cation selectivity increasing smoothness of a surface of an electrode was prepared by dip-coating the electrode having cation selectivity prepared in Manufacturing Example 1 in the polymer solution.

### Manufacturing Example 5

### Manufacturing (2) of Composite electrode Coating Cation-Exchange Solution on Top Ionic Coating Layer

A polymer solution was manufactured by mixing 1.0g of polystyrene (cation-exchange capacity = 1.5 meq/g, MW = 350,000) having a cation-exchange group prepared by sulfonation reaction with 20g of dimethylacetamide (DMAc) and a negative electrode having cation selectivity increasing smoothness of a surface of an electrode was prepared by dip-coating the non-ionic electrode no having anion and cation selectivity prepared in Manufacturing Example 3 in the polymer solution.

### Manufacturing Example 6

### Manufacturing (1) of Composite electrode Coating Anion-Exchange Solution on Top Ionic Coating Layer

A polymer solution was manufactured by mixing 1.0g of polyethersulfone (anion-exchange capacity = 1.2 meq/g, MW = 350,000) having a anion-exchange group prepared by amination reaction with 20g of dimethylacetamide and a positive electrode having anion selectivity increasing smoothness of a surface of an electrode was prepared by dip-coating the electrode having cation selectivity prepared in Manufacturing Example 2 in the polymer solution.

### Manufacturing Example 7

### Manufacturing (2) of Composite electrode Coating Anion-Exchange Solution on Top Ionic Coating Layer

A polymer solution was manufactured by mixing 1.0g of polyethersulfone (anion-exchange capacity = 1.2 meq/g, MW = 350,000) having a anion-exchange group prepared by amination reaction with 20g of dimethylacetamide and a positive electrode having anion selectivity increasing smoothness of a surface of an electrode was prepared by dip-coating an non-ionic electrode no having anion and cation selectivity prepared in Manufacturing Example 3 in the polymer solution.

### Example and Comparative Example

Experiment was performed by using each electrode as a positive electrode and/or a negative electrode as Example and Comparative Example using the electrode of manufacturing examples 1 to 7.

Examples 1 to 4 and Comparative Examples 1 to 24 performed an experiment by being divided as shown in Table 1. A method for manufacturing each deionization cell for the present experiment is as follows.

The manufactured electrode is cut at 10 × 10 cm² and then, the positive electrode and the negative electrode are alternately stacked one above the other and the spacer (200 mesh, polyamide) having a thickness of 100 µm was mounted so as to pass through a fluid while preventing two electrodes of the positive electrode and the negative electrode from contacting between a single electrode configured of a positive electrode and a negative electrode and another electrode. A solution may passes through the spacer from all of the surfaces of the electrode by punching a hole of 1cm on a center of the electrode and may be discharged to the center thereof. A acrylic plate having a size of 15 × 15 cm² was attached to the outside of the positive electrode and the negative electrode and was fixed by a bolt to configure the capacitive deionization single cell.

NaCl solutions of 100 ppm, 200 ppm, 500 ppm, and 1000 ppm were each supplied at a rate of 20 mL/min while constantly applying electrode potential at 1.5V. The deionization efficiency was analyzed by measuring the electric conductivity of discharged water. After the adsorption is performed for 3 minutes, the operation was performed by the desorption scheme by shorting the electrode potential for 1 minute, applying revere potential for 50 seconds, and changing into a rest period. An average salt removal rate was measured from the electric conductivity of the discharged water while continuously operating the CDI for 1 weak. Results obtained by performing the deionization experiment by the manufactured cell were shown in Table 1 as the removal rate % of salt.

**<Table 1> Evaluation of Deionization Efficiency**

| | Positive Electrode | Negative Electrode | NaCl Concentration | Removal Rate of Salt (%) |
|---|---|---|---|---|
| Example 1 | Manufacturing Example 6 | Manufacturing Example 4 | 100ppm | 91 |
| Example 2 | Manufacturing Example 6 | Manufacturing Example 4 | 200ppm | 87 |
| Example 3 | Manufacturing Example 6 | Manufacturing Example 4 | 500ppm | 78 |
| Example 4 | Manufacturing Example 6 | Manufacturing Example 4 | 1000ppm | 73 |
| Comparative Example 1 | Manufacturing Example 7 | Manufacturing Example 4 | 100ppm | 90 |
| Comparative Example 2 | Manufacturing Example 7 | Manufacturing Example 4 | 200ppm | 83 |
| Comparative Example 3 | Manufacturing Example 7 | Manufacturing Example 4 | 500ppm | 68 |
| Comparative Example 4 | Manufacturing Example 7 | Manufacturing Example 4 | 1000ppm | 59 |
| Comparative Example 5 | Manufacturing Example 6 | Manufacturing Example 5 | 100ppm | 90 |
| Comparative Example 6 | Manufacturing Example 6 | Manufacturing Example 5 | 200ppm | 82 |
| Comparative Example 7 | Manufacturing Example 6 | Manufacturing Example 5 | 500ppm | 65 |
| Comparative Example 8 | Manufacturing Example 6 | Manufacturing Example 5 | 1000ppm | 55 |
| Comparative Example 9 | Manufacturing Example 7 | Manufacturing Example 5 | 100ppm | 89 |
| Comparative Example 10 | Manufacturing Example 7 | Manufacturing Example 5 | 200ppm | 81 |
| Comparative Example 11 | Manufacturing Example 7 | Manufacturing Example 5 | 500ppm | 63 |
| Comparative Example 12 | Manufacturing Example 7 | Manufacturing Example 5 | 1000ppm | 50 |
| Comparative Example 13 | Manufacturing Example 2 | Manufacturing Example 1 | 100ppm | 84 |
| Comparative Example 14 | Manufacturing Example 3 | Manufacturing Example 1 | 100ppm | 85 |
| Comparative Example 15 | Manufacturing Example 6 | Manufacturing Example 1 | 100ppm | 86 |
| Comparative Example 16 | Manufacturing Example 7 | Manufacturing Example 1 | 100ppm | 85 |
| Comparative Example 17 | Manufacturing Example 2 | Manufacturing Example 3 | 100ppm | 83 |
| Comparative Example 18 | Manufacturing Example 3 | Manufacturing Example 3 | 100ppm | 75 |
| Comparative Example 19 | Manufacturing Example 6 | Manufacturing Example 3 | 100ppm | 85 |
| Comparative Example 20 | Manufacturing Example 7 | Manufacturing Example 3 | 100ppm | 86 |
| Comparative Example 21 | Manufacturing Example 2 | Manufacturing Example 4 | 100ppm | 87 |
| Comparative Example 22 | Manufacturing Example 3 | Manufacturing Example 4 | 100ppm | 84 |
| Comparative Example 23 | Manufacturing Example 2 | Manufacturing Example 5 | 100ppm | 86 |
| Comparative Example 24 | Manufacturing Example 3 | Manufacturing Example 5 | 100ppm | 83 |

As shown in Table 1, when the ionic resin and the electrode active material are primarily coated and then, the ionic resin forms the secondary coating layer, Example 1, Comparative Example 1, Comparative Example 5, and Comparative Example 9 all show the excellent adsorption performance in 100 ppm having low ion concentration in the aqueous solution but as the concentration is increased, the electrode of which both of the positive electrode and the negative electrode use the ion-exchange solution as the binder shows the more excellent characteristic than the electrode using the non-ionic solution as the binder as in Examples 1 to 4. In particular, in 1000 ppm having high concentration, it can be confirmed that Example 4 shows the treatment efficiency of 73% but Comparative Example 12 shows the treatment efficiency of 50%. When the non-ionic solution is used as the binder, an activated carbon bonded to the non-ionic binder cannot adsorb or transmit ions and thus, the specific surface area of the activated carbon is reduced. As a result, it is considered that the adsorption characteristic is lower than Example 1 in high concentration. Further, when the ion-exchange solution is used as the binder, the specific surface area of the activated carbon is maintained as it is when the activated carbon adsorbs ions. Therefore, it is considered that higher adsorption characteristic is exhibited at high concentration. That is, when the ion-exchange solution is used as the binder, the binder of the ion-exchange solution bonded to the activated carbon transfers and adsorbs ions to and in the activated carbon or since the ion exchange binder can adsorb ions, the unique specific surface area of the activated carbon can be maintained as it is. Therefore, it is considered that more excellent characteristics are exhibited at high concentration.
In addition, it can be appreciated that Comparative Examples 13 to 24 in which the top layer is formed by secondarily coating both of the positive electrode and the negative electrode with the binder has very low deionization efficiency, as compared with performing the deionization processing by using the electrode module in which the secondary coating layer is formed by coaing both of the negative electrode and the positive electrode with the polymer binder having the ion exchange group. In particular, as the electrode made of PVDF in which both electrodes does not have the cation-exchange group and the anion-exchange group, in the case of Comparative Example 18 that corresponds to the case in which there is no secondary coating layer, it can be appreciated that the desorption removal rate is suddenly lowered to 75% at 100 ppm. In the case of the CDI electrode module using the electrode according to the configuration of the present invention, it can be appreciated that the deionization efficiency is vey excellent above 90%.

In addition, when reviewing the change in pH of the treated water according to the treated time of the salt treated water of Comparative Example and Example, pH of the treated water of the electrode module having the configuration according to the exemplary embodiment of the present invention is very constant. Further, it can be appreciated that the change rate of pH according to the potential is low and thus, the deionization efficient is stable from low potential from high potential. Therefore, it can be appreciated that the apparatus for removing CDI dissolved ions using the electrode according to the configuration of the present invention has a very excellent effect.

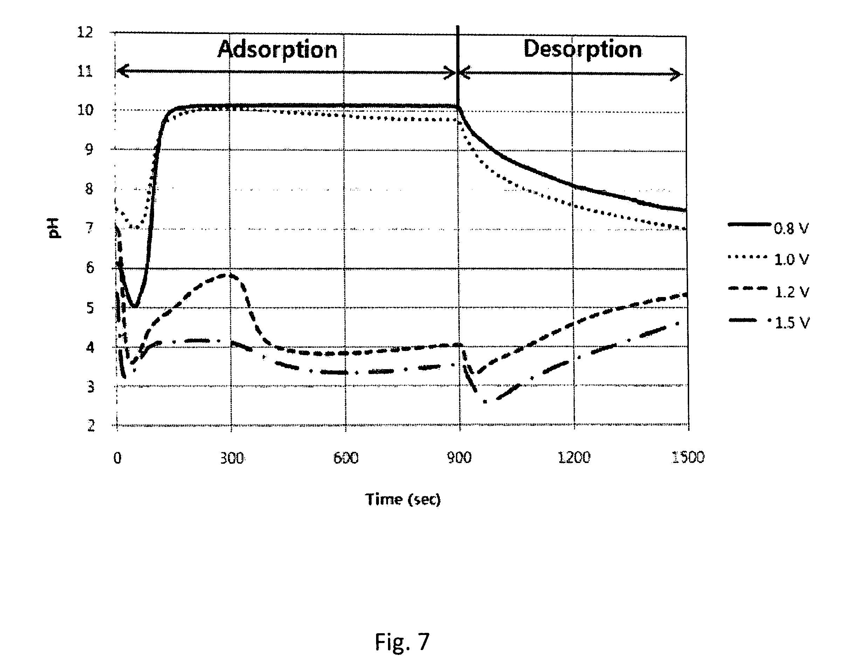

Describing in detail this, FIG. 7 shows the change in pH according to potential when Comparative Example 18 is used as the positive electrode and the negative electrode. As shown in FIG. 7, it can be appreciated that when the adsorption potential is low, pH is increased and when the applied potential is 1.2V or more, pH is suddenly lower. As such, when pH is changed, the generated purified water cannot be drunken and when the operation is performed by lowering potential, the deioniziation efficiency is greatly deteriorated, which cannot be used for the operation.

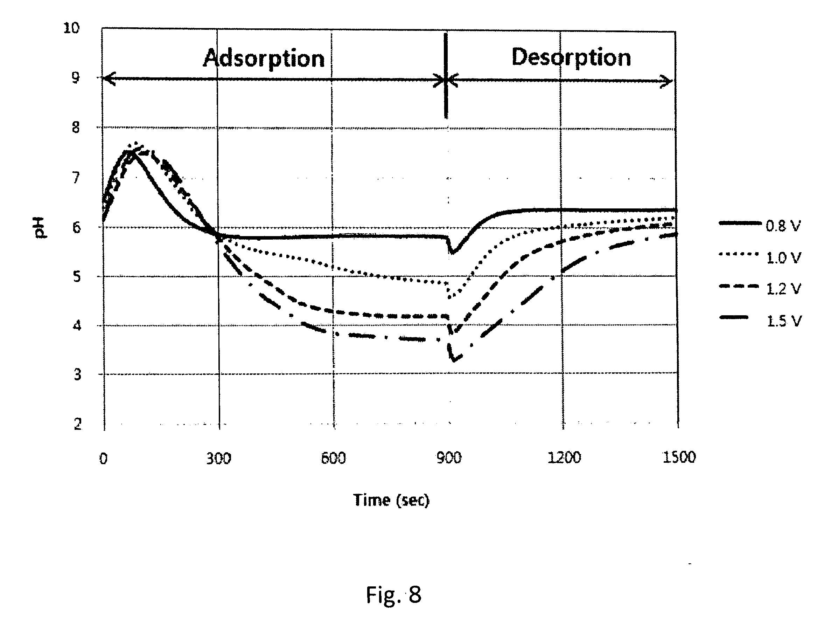

FIG. 8 shows the change in pH according to the potential after the unit cell is manufactured in Comparative Example 24. Further, the change in pH according to the applied potential or according to the operating time even in the same potential is largely exhibited and therefore, it cannot be used as the suitable electrode.

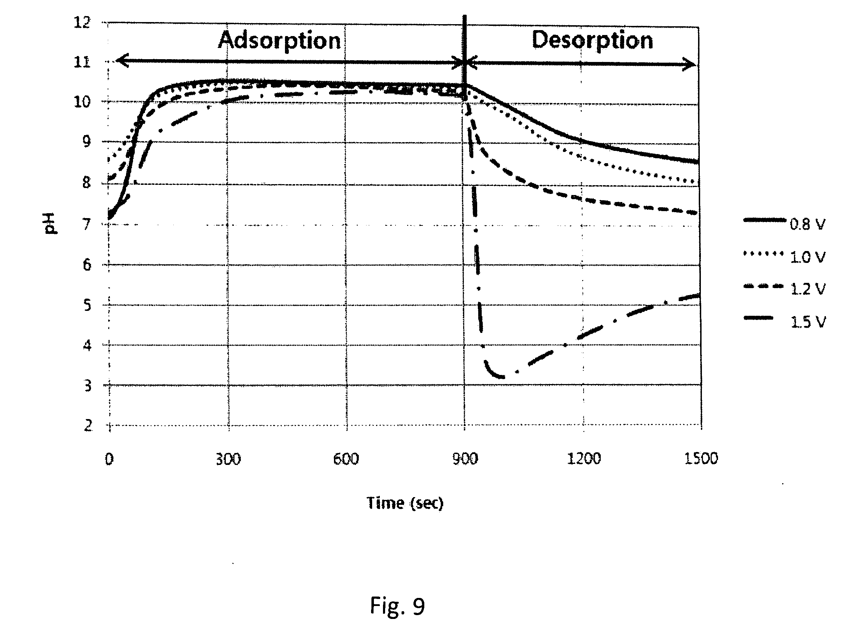

In addition, FIG. 9 shows one corresponding to Comparative Example 20, wherein the electrode of Manufacturing Example 3 is used as a negative electrode and Manufacturing Example 7 is used as a positive electrode. In addition, the change in pH according to the applied potential or according to the operating time even in the same potential is largely exhibited and therefore, it cannot be used as the suitable electrode.

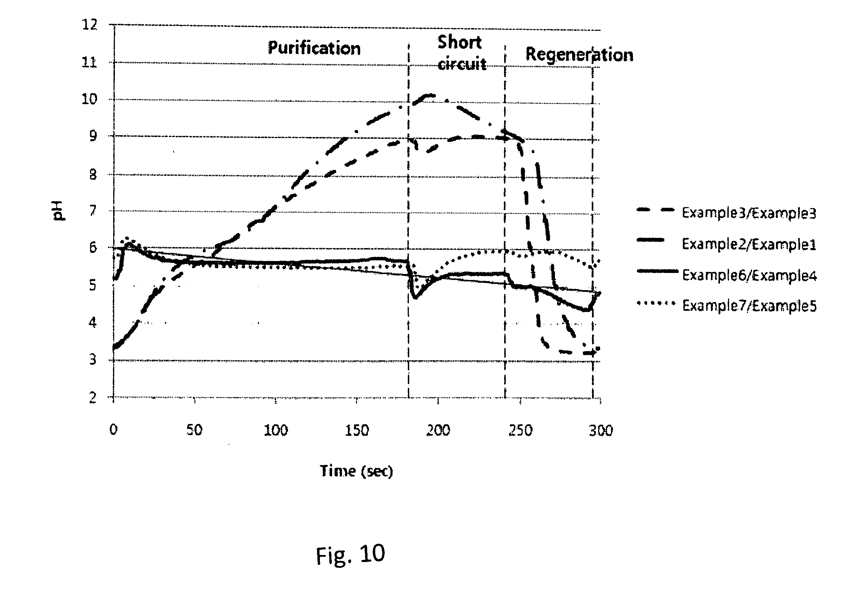

FIG. 10 shows the change in pH according to the adsorption and desorption for Example 1, Comparative Example 9, Comparative Example 13, and Comparative Example 18. In the case of Comparative Example 18 and Comparative Example 13, it can be appreciated that the change in pH is high in a form in that the coating layer of the ion-exchange solution is not formed. It can be appreciated that Example 1 and Comparative Example 9 forms the coating layer of the ion-exchange solution to serve as a membrane blocking the ion selectivity and the side reaction of the electrode, such that pH is not substantially changed.

Therefore, when the binder organic solution having the ion-exchange group is coated, it can be appreciated that the side reaction does not occur at the surface of the electrode and it can be used as the stable electrode. When the secondary coating layer is made of the binder solution having the ion-exchange group, a very excellent effect is exhibited.

The adsorption characteristic of the CDI electrode is affected by one electrode having degraded performance at a constant potential. Therefore, it can be appreciated that the case in which one of the positive electrode and the negative electrode has the top coating layer has lower adsorption characteristics than the case of the present invention in which the electrode of both of the positive electrode and the negative electrode are formed with the coating layer. It can be appreciated that the adsorption characteristics are affected by the remaining one electrode that is not coated. Further, it can be appreciated from these results that the electrode of the present invention made of the positive electrode and the negative electrode having the coating layer coated with the binder solution having the ion-exchange group in the CDI electrode cell is very effective.

Comparative Example 13, Example 1, Comparative Example 18, and Comparative Example 9 each manufacture the electrode using the polymer solution binder and then, show that the coating layer of the ion-exchange solution is formed and is not formed. It can be appreciated that in the case of Comparative Example, as the used time is increased, the degradation in the performance of the electrode is shown but in the case of Example, the initial performance is continued to be maintained. This increases the smoothness of the electrode surface according to the formation of the coating layer to prevent the performance degradation due to the fouling. Therefore, it can be appreciated that the composite electrode having the coating layer of the ion exchange solution exhibits the excellent characteristics.

## Claims

1. A method for manufacturing a CDI electrolytic cell for adsorbing and desorbing dissolved ions manufactured by sequentially stacking a composite electrode and a spacer, the method comprising:
(a) manufacturing an electrode by preparing an organic solvent slurry including an organic solvent, an ionic resin having a cation-exchange group, and an electrode active material and then, forming an active layer by applying the slurry to a collector;
(b) manufacturing an electrode by preparing an organic solvent slurry including the organic solvent, an ionic resin having an anion-exchange group, and the electrode active material and then, forming an active layer by applying the slurry to a collector; and
(c) forming a top cationic coating layer by coating the electrode formed at (a) with the organic solution in which the ionic resin having the cation-exchange group is dissolved and forming a top anionic coating layer by coating the electrode formed at (b) with the organic solution in which the ionic resin having the anionic exchange group is dissolved.

2. The method of claim 1, further comprising: drying after steps (a), (b), or (c).

3. The method of claim 2, further comprising: pressing for smoothing the surface of the composite electrode subsequent to the drying after step (c).

4. The method of claim 1, wherein at the preparing of the slurry, a conductive material is added.

5. The method of claim 1, wherein the composite electrode forming an ionic resin having a catonic-exchange group as a top ionic coating layer is used as a negative electrode and the composite electrode forming a ionic resin having an anionic-exchange group as a top ionic coating layer is used as a positive electrode.

6. The method of claim 5, wherein an organic solvent of the organic solution is any one selected from dimethylformamide, dimethyl acetamide, N-methyl-2-pyrrolidone acetone, chloroform, dichloromethane, trichlorethylene, ethanol, methanol, normalhexane or a mixture of two or more thereof.

7. The method of claim 5, wherein the electrode active material is an activated carbon-based material of any one or two or more selected from activated carbon powder, activated carbon fiber, carbon nano tube, carbon aerogel, or metal oxide of any one or two or more selected from RuO2, Ni(OH)2, MnO2, PbO2, TiO2.

8. The method of claim 5, wherein the collector is a sheet, a thin film, or a plain weave wire cloth type including aluminum, nickel, copper, titanium, iron, stainless steel, graphite, or a mixture thereof.

9. The method of claim 1, wherein the composite electrode forming an ionic resin having a catonic-exchange group as a top ionic coating layer is used as a negative electrode and the composite electrode forming a ionic resin having an anionic-exchange group as a top ionic coating layer is used as a positive electrode.

10. The method of any one of claims 1 to 9, wherein the cation-exchange group is selected from a sulfonic acid group (-SO3H), a carboxyl group (-COOH), a phosphonic group (-PO3H2), a phosphinic group (-HPO2H), an A-sonic group (-AsO3H2), and a selenonic group (-SeO3H) and the anion-exchange group is selected from quaternary ammonium salt (-NH3), primary ∼ tertiary amine (-NH2, -NHR, -NR2), a quaternary phosphonium group (-PR4), and a tertiary sulfonium group (-SR3).

11. The method of claim 10, wherein the ionic resin is any one or a mixed resin of two or more selected from polystyrene, polysulfone, polyethersulfone, polyamide, polyester, polyimide, polyether, polyethylene, polytetrafluoroethylene, and poly-glycidyl methacrylate, which have the cation-exchange group or the anion-exchange group as a substituent and are dissolved in an organic solvent.

12. The method of claim 10, wherein the resin having the cation-exchange group or the anion-exchange group is dissolved in an organic solvent and is not dissolved in water.

13. A CDI electrolytic module for adsorbing and desorbing dissolved ions prepared by putting an electrolytic cell manufactured by sequentially stacking a composite electrode manufactured by using the manufacturing method of any one of claims 1 to 9 and a spacer in a case having an inlet and an outlet of dissolved ion water.

14. The CDI electrolytic module of claim 12, wherein the module has a form in which at least two modules are connected with each other.
